# EUROPEAN PATENT APPLICATION

(11) **EP 4 550 566 A1**
(43) Date of publication of application: **07.05.2025**
(21) Application number: 23831926.3
(22) Date of filing: 29.06.2023
(51) Int. Cl.: H01M 50/609

(54) **APPARATUS FOR INJECTING ELECTROLYTE INTO BATTERY CELL**

(30) Priority: 01.07.2022 KR 20220081391
(71) Applicant: LG Energy Solution, Ltd., Seoul 07335 (KR)
(72) Inventor: HWANG, Seung Jin, Daejeon 34122 (KR); LEE, Jin Soo, Daejeon 34122 (KR); OH, Jung Su, Daejeon 34122 (KR); KIM, Ki Su, Daejeon 34122 (KR); PARK, Sung Min, Daejeon 34122 (KR); SHIN, Soon Ho, Daejeon 34122 (KR)
(74) Representative: Goddar, Heinz J.
(86) International application number: PCT/KR2023/009133
(87) International publication number: WO 2024/005568

(57) **Abstract**

An electrolyte injection device for a battery cell according to one example of the present invention comprises a transfer member provided to be transferable along a first direction, a base member, which is disposed on the transfer member, for mounting at least one battery cell, an injection part for injecting an electrolyte into the battery cell located on the base member, and a clamping unit provided on the base member and provided to clamp both sides of the battery cell along the first direction.

## Description

### Technical Field

The present invention relates to an electrolyte injection device for a battery cell, which relates to, specifically, an electrolyte injection device for a battery cell capable of preventing folding of a separator inside the battery cell due to the flow of an electrolyte injected into the battery cell in a process of transferring the battery cell after an electrolyte injection process.

This application claims the benefit of priority based on Korean Patent Application No. 10-2022-0081391 dated July 1, 2022, the disclosure of which is incorporated herein by reference in its entirety.

### Background Art

Secondary batteries may be classified into a rectangular secondary battery, a cylindrical secondary battery, or a pouch-type secondary battery, and the like.

A battery cell constituting a pouch-type secondary battery comprises an electrode assembly, a pouch surrounding the electrode assembly, and an electrolyte accommodated inside the pouch. In the electrode assembly, a plurality of positive and negative electrodes and a plurality of separators interposed between the positive and negative electrodes are alternately laminated, and a pair of lead tabs electrically connected to the electrode assembly are exposed to the outside of the pouch.

In pouch packaging and electrolyte injection processes, the electrode assembly is disposed in an aluminum pouch, and then the electrolyte is injected into the pouch.

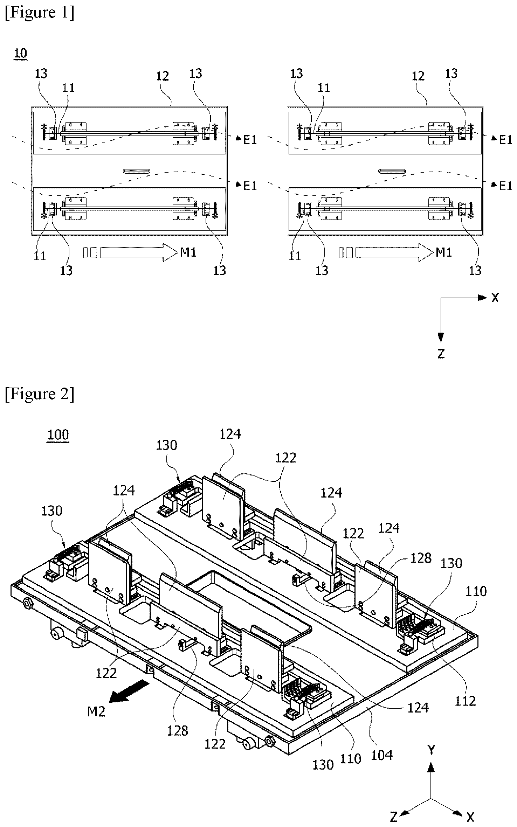

Figure 1 is a diagram for explaining a transfer direction of a battery cell and an electrolyte flow direction in a conventional secondary battery electrolyte injection device.

Referring to Figure 1, in a conventional secondary battery electrolyte injection device (10), a battery cell (11) is disposed on a transfer member (or also referred to as a 'transfer pallet', 12), and both sides of the battery cell (11) on the transfer member (12) are fixed by a jig (13). In this way, the electrolyte is injected into the battery cell (11) whose position is fixed on the transfer member (12), and the battery cell (11) in a state where the electrolyte is injected is transferred to a preset position along a predetermined direction (M1).

The X-axis direction shown in Figure 1 represents the transfer direction of the transfer member (12), and represents the width direction (direction connecting a pair of lead tabs) of the battery cell (11). In addition, the Z-axis direction is a direction in which the jig (13) fixes both sides of the battery cell (11), which represents the thickness direction (direction orthogonal to the width direction) of the battery cell (11). In general, the battery cell (11) is manufactured in a form having a long width compared to the thickness.

The flow direction (E1) of the electrolyte injected into the battery cell (11) has the same direction as the transfer direction (also referred to as a 'logistics progress direction', M1) by the transfer member (12), and as shown in Figure 1, the flow direction (E1) of the electrolyte has the same direction as the width direction (X-axis direction) of the battery cell (11).

During the transfer process of the battery cell (11) by the transfer member (12), the electrolyte injected into the battery cell (11) causes a lot of sloshing (flow) along the width direction of the battery cell (11).

In this way, when the flow of the electrolyte occurs inside the battery cell (11), there is a problem that the lower end of the separator of the electrode assembly is folded due to the flow of the electrolyte inside the pouch during the transfer process.

### Disclosure

### Technical Problem

It is a problem to be solved by the present invention to provide an electrolyte injection device for a battery cell capable of preventing a phenomenon in which a separator inside the battery cell is folded due to a flow of an electrolyte injected into the battery cell during the transfer process of the battery cell after the electrolyte injection process.

### Technical Solution

In order to solve the above-described problem, an electrolyte injection device for a battery cell related to one example of the present invention is an electrolyte injection device for injecting an electrolyte into a battery cell including an electrode assembly, a pouch accommodating the electrode assembly, and a pair of lead tabs exposed to the outside of the pouch and electrically connected to the electrode assembly, which comprises a transfer member provided to be transferable along a first direction, a base member, which is disposed on the transfer member, for mounting at least one battery cell, an injection part for injecting an electrolyte into the battery cell located on the base member, and a clamping unit provided on the base member and provided to clamp both sides of the battery cell along the first direction.

Also, the first direction may be provided so as not to be parallel to a second direction connecting the pair of lead tabs of the battery cell.

In addition, the first direction may be provided to be orthogonal to a second direction connecting the pair of lead tabs of the battery cell. Here, the second direction may be a width direction of the battery cell, and the first direction may be a thickness direction of the battery cell.

Furthermore, the clamping unit may comprise first and second clamping members for clamping both sides of the battery cell facing each other along the first direction, respectively.

In addition, the clamping unit may be provided to adjust a distance between the first and second clamping members. That is, the first clamping member and the second clamping member may be provided so that the distance therebetween is adjusted.

Specifically, as the battery cell is disposed between the first clamping member and the second clamping member, and the distance between the first clamping member and the second clamping member decreases, the first clamping member and the second clamping member are in contact with both sides of the battery cell, respectively, whereby the clamping of the battery cell is made. On the contrary, as the distance between the first clamping member and the second clamping member increases, the contact between the first clamping member or the second clamping member and the battery cell is released, whereby the unclamping (also referred to as 'clamping release) of the battery cell is made.

Also, the second clamping member may be provided to be movable on the base member along the first direction. At this time, the position of the first clamping member may be fixed so as not to move on the base member. That is, as the second clamping member is moved in a direction closer to or away from the first clamping member, the distance between the first and second clamping members may be adjusted.

In addition, when an external force is applied to the second clamping member, the second clamping member may be moved to increase the distance between the first and second clamping members, and when the external force applied to the second clamping member is released, the second clamping member may be moved to decrease the distance between the first and second clamping members.

Furthermore, the clamping unit may comprise a support unit for elastically supporting the second clamping member with respect to the base member. At this time, when the external force applied to the second clamping member is released, the second clamping member may be moved by the support unit to decrease the distance between the first and second clamping members.

Also, the clamping unit may comprise a guide frame, on which the second clamping member is fixed, provided to be moved in a direction away from the first clamping member when an external force is applied. That is, the second clamping member is fixed to the guide frame, and the guide frame is provided to be movable on the base member. At this time, as the second clamping member is moved together with the guide frame, the distance between the first clamping member and the first clamping member on the base member may be adjusted. In addition, the guide frame is provided to move in a direction closer to the first clamping member when the external force is released.

Furthermore, the clamping unit may comprise a push bar connected to the guide frame and formed to protrude on the outside of the first clamping member. The push bar may extend from the guide frame toward the first clamping member, and be provided to protrude on the outside of the first clamping member.

Also, when an external force is applied to the push bar, the guide frame may be moved together with the second clamping member in a direction (an unclamping direction) away from the first clamping member. In addition, when the external force applied to the push bar is released, the guide frame may be moved in a direction (clamping direction) closer to the first clamping member together with the second clamping member.

Furthermore, the clamping unit may comprise at least one guide block provided on the base member to guide the movement of the guide frame.

The support unit is provided to connect the base member and the guide frame. At this time, the guide frame may be elastically supported on the base member by the support unit, and when the external force applied to the push bar is released, it may be moved in a direction closer to the first clamping member along the guide block.

Also, the support unit may comprise a support block fixed to the base member and disposed at a predetermined interval from the guide frame, and an elastic member. The elastic member may be fixed to the support block and the guide frame, respectively, and may be provided to elastically support the guide frame with respect to the support block, where as one example, the elastic member may be a spring.

In addition, the elastic member may be provided so that it is tensioned when the guide frame is moved in a direction away from the first clamping member and restored when the external force applied to the push bar is released.

Furthermore, the guide frame may be moved in a direction closer to the first clamping member by the restoring force of the elastic member.

Also, the clamping unit may comprise a pressurizing member generating an external force pressurizing the push bar. The pressurizing member may be provided to apply an external force to the push bar when the transfer member is moved along the first direction, and then reaches a preset position. At this instance, an unclamping operation of the clamping unit for the battery cell is performed by the pressurizing member at the preset position.

In addition, the first and second clamping members may be provided in a plurality of members at predetermined intervals along a second direction connecting the pair of lead tabs of the battery cell.

At this time, the plurality of first and second clamping members may be provided to clamp the central region and both side edge regions of the battery cell along the second direction, respectively, and the clamping area for the central region and the clamping area for the edge region in the battery cell may be set to be different from each other.

Specifically, both sides of one battery cell on the base member may be clamped by the plurality of first clamping members and the plurality of second clamping members.

For example, both sides of one battery cell may be clamped by three first clamping members and three second clamping members. In one side of the battery cell, the central region and both side edge regions may each be supported by three first clamping members, and in the other side of the battery cell, the central region and both side edge regions may each be supported by three second clamping members. At this instance, the sizes of the clamping member supporting the central region and the clamping member supporting the edge region may be set to be different from each other.

### Advantageous Effects

As described above, the electrolyte injection device for a battery cell related to one example of the present invention has the following effects.

As the movement direction of the transfer member transferring the battery cell and the flow direction of the electrolyte injected into the battery cell are configured in the same direction, it is possible to prevent the flow of the electrolyte along the width direction of the battery cell from occurring upon battery cell transfer.

In addition, in the process of transferring the battery cell after the electrolyte injection process, it is possible to prevent the phenomenon in which the separator inside the battery cell is folded due to the flow of the electrolyte injected into the battery cell.

### Description of Drawings

Figure 1 is a diagram for explaining a transfer direction of a battery cell and an electrolyte flow direction in a conventional secondary battery electrolyte injection device.
Figure 2 is a perspective diagram showing an electrolyte injection device according to one example of the present invention.
Figure 3 is a schematic diagram showing a battery cell.
Figures 4 and 5 are perspective diagrams showing a state where a battery cell is clamped in the electrolyte injection device illustrated in Figure 2.
Figure 6 is the plan view of the electrolyte injection device illustrated in Figure 5;
Figure 7 is the enlarged view of the part A illustrated in Figure 6.
Figure 8 is a diagram for explaining a transfer direction of a transfer member and a flow direction of an electrolyte in the electrolyte injection device illustrated in Figure 2.

### Mode for Invention

Hereinafter, an electrolyte injection device for a battery cell according to one example of the present invention will be described with reference to the accompanying drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

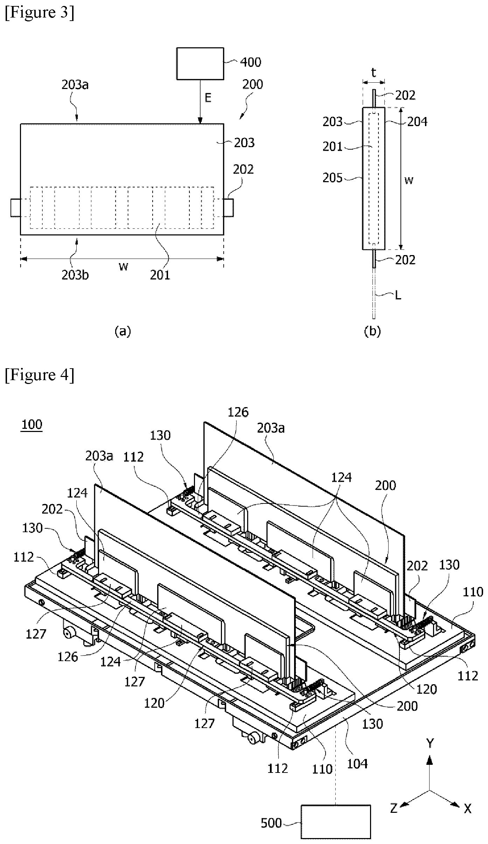

Figure 2 is a perspective diagram showing an electrolyte injection device (100) for a battery cell according to one example of the present invention, and Figure 3 is a schematic diagram showing a battery cell (200).

An electrolyte injection device (100) for a battery cell related to one example of the present invention is a device for injecting an electrolyte (E) into the battery cell (200).

The battery cell (200) comprises an electrode assembly (201), a pouch (203) accommodating the electrode assembly (201), and a pair of lead tabs (202) exposed to the outside of the pouch (203) and electrically connected to the electrode assembly (201).

Referring to Figure 2, the electrolyte injection device (100) a transfer member (104) provided to be transferable along a first direction (M2, z-axis direction) and the transfer member (104), a base member (110), which is disposed on the transfer member (104), for mounting at least one battery cell (200), an injection part (400) for injecting an electrolyte (E) into the battery cell (200) located on the base member (110), and a clamping unit (120) provided on the base member (110) and provided to clamp both sides (204, 205) of the battery cell (200) along the first direction (M2).

Referring to Figure 3, the battery cell (200) has predetermined width (w) and thickness (t). In this document, the direction parallel to the imaginary line (L) connecting the pair of lead tabs (202) is referred to as the width (w) direction of the battery cell (200), and the direction orthogonal to the width (w) direction of the battery cell (200) is referred to as the thickness (t) direction of the battery cell (200). In addition, as described above, the battery cell (200) is in a form to have a long width (w) compared to the thickness (t).

Referring to Figures 2 and 3, when the battery cell (200) is mounted on the base member (110), the thickness (t) direction of the battery cell (200) is the same direction as the first direction (M2). In addition, according to the present example, the battery cell (200) on the base member (110) is transferred in the same first direction (M2) as the thickness (t) direction in a state where both sides (204, 205) of the battery cell are clamped along the thickness direction.

**In** addition, the first direction (M2) may be provided so as not to be parallel to the second direction (direction parallel to the imaginary line L) connecting the pair of lead tabs (202) of the battery cell (200), and preferably, the first direction (M2) may be provided to be orthogonal to the second direction connecting the pair of lead tabs of the battery cell (200). Here, the second direction may be the width (w) direction of the battery cell (200), and the first direction (M2) may be the thickness (t) direction of the battery cell (200).

Referring to Figures 2 and 3, in this document, the X-axis direction represents the width direction of the battery cell (200), the Z-axis direction represents the thickness direction of the battery cell (200) and the first direction (M2), and the Z-axis direction represents a direction where the clamping unit (120) fixes both sides of the battery cell (11).

In addition, the upper end (203a) of the pouch (203) represents a region into which the electrolyte (E) is injected, and the lower end (203b) of the pouch (203) represents a region seated on the base member (110). When the electrolyte (E) is injected through the injection part (400), the upper end (203a) of the pouch (203) may be in an open state, and the remaining edges except for the lower end (203b) and the upper end of the pouch (203) may be in a sealed state.

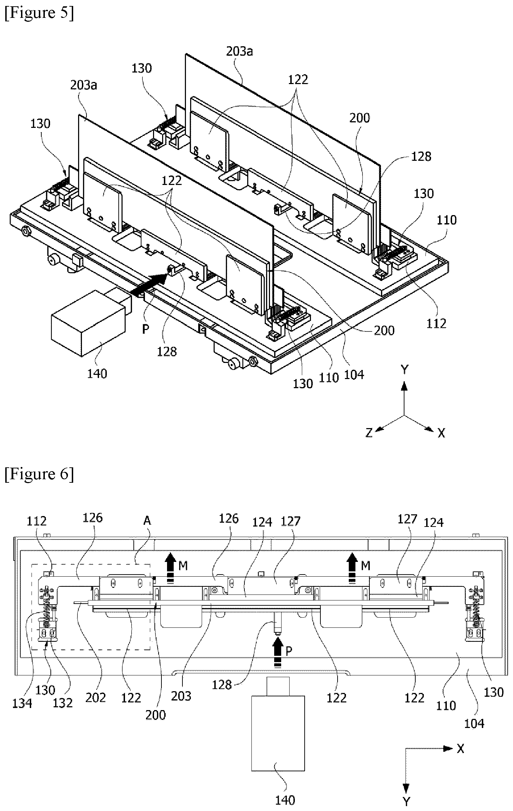

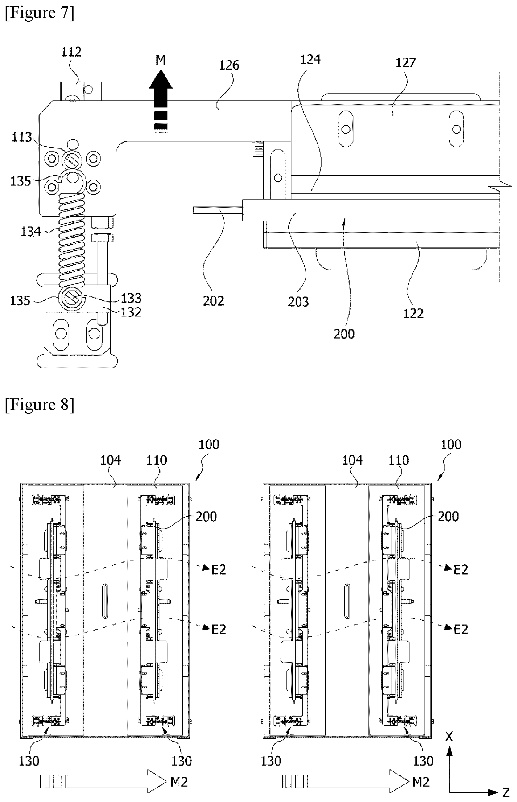

Figures 4 and 5 are perspective diagrams showing a state in which the battery cell (200) is clamped in the electrolyte injection device (100) illustrated in Figure 2, Figure 6 is a plan view of the electrolyte injection device illustrated in Figure 5, and Figure 7 is the enlarged view of the part A illustrated in Figure 6.

In addition, Figure 8 is a diagram for explaining a transfer direction (M2) of a transfer member and a flow direction (E2) of an electrolyte in the electrolyte injection device (100) illustrated in Figure 2.

Referring to Figures 2 and 8, the flow direction (E2) of the electrolyte injected into the battery cell (200) has the same direction as the transfer direction (M2) by the transfer member (104), and the flow direction (E2) of the electrolyte has the same direction as the thickness (w) direction (Z-axis direction) of the battery cell (200). According to such a constitution, it is possible to prevent the flow of the electrolyte along the width (w) direction of the battery cell (200) from occurring when the battery cell (200) is transferred, and accordingly, it is possible to prevent separator folding of the electrode assembly (201) inside the battery cell (200).

The structure of the electrolyte injection device (100) will be described in detail with reference to Figures 2 to 7.

The transfer member (104) is a member for transferring the battery cell (200) in a preset first direction, where the base member (110) is positioned on the transfer member (104). In addition, the transfer member (104) may be provided in the form of a pallet whose one side, on which the base member (110) is mounted, has a flat shape.

The transfer member (104) may be transferred by the transfer part (500), and the transfer part (500) may be configured in various types, and may comprise, for example, a plurality of rolls or a conveyor belt.

The battery cell (200) is seated on the base member (110), and the base member (110) may be provided in the form of a flat plate whose one side, on which the battery cell (200) is seated, has a flat plate shape.

In addition, the position of at least one battery cell (200) is fixed to the base member (110) by the clamping unit (120). The clamping unit (120) is provided to clamp the battery cell (200) on both sides (204, 205) of the battery cell (200).

The clamping unit (120) may comprise first and second clamping members (122, 124) for clamping both sides (204, 205) of the battery cell (200) facing each other along the first direction (M2), respectively. In addition, the clamping unit (120) comprises a guide frame (126) to which the second clamping member (124) is fixed.

The first clamping member (122) and the second clamping member (124) may be provided in a plurality of members spaced at predetermined intervals along the second direction (width direction of the battery cell) connecting the pair of lead tabs (202) of the battery cell (200). That is, the plurality of first and second clamping members may be provided to clamp the central region and both edge regions of the battery cell in the second direction, respectively.

Both sides (204, 205) of one battery cell (200) on the base member (110) may be clamped by a plurality of first clamping members (122) and a plurality of second clamping members (124).

In addition, as the center region and both side edge regions along the width direction of the battery cell (200) are each clamped, it is possible to prevent a phenomenon in which the lower end of the separator (103) inside the battery cell (200) is folded upon transferring.

The first clamping member (122) supports one side (204) of the battery cell (200), and the second clamping member (124) supports the other side (205) of the battery cell (200) in a state spaced apart from the first clamping member (122) at predetermined intervals.

In addition, the first clamping member (122) and the second clamping member (124) may be provided so that the distance therebetween is adjusted. To this end, the first clamping member (122) may be fixed on the base member (110), and the second clamping member (124) may be mounted to be movable on the base member (110).

Accordingly, the second clamping member (124) may be provided to be moved in a direction away from or closer to the first clamping member (122) when an external force is applied.

Meanwhile, when one battery cell (200) is clamped with a plurality of second clamping members (124), the plurality of clamping members (124) is each mounted on the guide frame (126).

The guide frame (126) guides the movement of the plurality of second clamping members (124), and performs a function of moving the plurality of second clamping members (124) integrally.

As one example, the guide frame (126) may also be connected to the plurality of second clamping members (124) by a connection block (127), and the guide frame (126) may also be connected to the plurality of second clamping members (124) directly without a connection block (127).

In addition, when an external force is applied to the guide frame (126), the guide frame (126) and the plurality of second clamping members (124) connected to the guide frame (126) may be moved together in a direction away from the first clamping member (122).

Meanwhile, the clamping unit (120) may comprise a push bar (128) connected to the guide frame (126) and formed to protrude on the outside of the first clamping member (122). When an external force is applied to the push bar (128), the guide frame (126) is moved together with the push bar. That is, the push bar (128) is formed so that one end protrudes on the outside of the first clamping member (122) in a state of being connected to the guide frame (126).

When the push bar (128) is pressurized (P) in a direction facing the second clamping block (124), the guide frame (126) is moved in a direction away from the battery cell (200), that is, in a direction (M) away from the first clamping member (122), and the distance between the first clamping member (122) and the second clamping member (124) widens.

At this instance, when the distance between the first clamping member (122) and the second clamping member (124) widens, the clamping of the battery cell (200) by the first clamping member (122) and the second clamping member (124) is released, and it is possible to unload the battery cell (200) from the base member (110).

Meanwhile, the guide frame (126) may be provided to be moved along the thickness direction (Z direction in the drawing) of the battery cell (200).

In addition, the clamping unit (120) may comprise at least one guide block (112) provided on the base member (110) to guide the movement of the guide frame (126).

The guide frame (126) may be moved along the guide block (112), and the guide block (112) is provided on the base member (110), but the lower end of the guide frame (126) is inserted, which may guide the movement of the guide frame.

Also, the clamping unit (120) may comprise a support unit (130) for elastically supporting the second clamping member (124) with respect to the base member (110). At this time, when the external force applied to the second clamping member (124) is released, the second clamping member (124) may be moved by the support unit (130) so that the distance between the first and second clamping members decreases. That is, the second clamping member (124) is moved in a direction closer to the first clamping member.

As one example, both ends of the guide frame (126) may be elastically supported on the base member (110) by the support unit (130), and it is provided to be moved in a direction closer to or away from the first clamping member (122) along the guide block (112).

When an external force (P) is applied to the push bar (128), the guide frame (126) may be moved along the guide block (112) in a direction (M) away from the first clamping member

(122), and when the external force applied to the push bar (128) is released, the guide frame (126) may be moved in a direction closer to the first clamping member (122) along the guide block (112).

The support unit (130) may comprise a support block (132) fixed to the base member (110) and disposed at a predetermined interval from the guide frame (126), and an elastic member (134).

The support block (132) is fixed to the base member (110) to be disposed at a predetermined interval from the guide frame (126). In addition, a first fixing part (133) is formed on the support block (132), and one end of the elastic member (134) is fixed to the first fixing part (133).

The elastic member (134) may be provided so that it is fixed to the support block (132) and the guide frame (126), respectively, and elastically supports the guide frame (126) with respect to the support block (132). As one example, the elastic member (134) may be a spring connecting the support block (132) and the guide frame (126).

In addition, the elastic member (134) may be provided so that it is tensioned when an external force is applied to the push bar (128) and the guide frame (126) is moved in a direction away from the first clamping member (122) and restored when the external force applied to the push bar is released. Furthermore, the guide frame (126) may be moved in a direction closer to the first clamping member (122) by the restoring force of the elastic member (134).

Referring to Figure 7, one end of the elastic member (134) is fixed to the first fixing part (133) of the support block (132), and the other end is fixed to the guide frame (126). A second fixing part (113) for fixing the other end of the elastic member (134) is formed on the guide frame (126).

In addition, the first fixing part (133) and the second fixing part (113) may be configured in various ways if they have a shape that both ends of the elastic member (134) may be fixed and caught.

The guide frame (126) is moved in a direction away from the battery cell (200) as an external force is applied to the push bar (128), and then when the external force applied to the push bar (128) is released, the guide frame (126) is returned to its original position by the restoring force of the elastic member (134), and the battery cell (200) is clamped again by the first clamping member (122) and the second clamping member (124).

Also, the length that the guide frame (126) and the second clamping member (124) are moved in a direction away from the first clamping member (122) may be adjusted by adjusting the length of the elastic member (134).

In addition, the electrolyte injection device (100) may further comprise a pressurizing member (140). The pressurizing member (140) performs a function that it applies an external force to the push bar (128) to be pushed. The pressurizing member (140) may be provided on one side of the transfer member (104) and disposed to pressurize the push bar (128).

In particular, the pressurizing member (140) may be provided to pressurize the push bar (128) when the transfer member (104) is moved in a preset first direction, and thus it is detected that the push bar (128) reaches a preset position, that is, a preset position to unclamp the battery cell (200). For example, a sensor capable of detecting the position of the transfer member (104) may be provided at a position adjacent to the pressurizing member (140).

As one example, the pressurizing member (140) may be provided as a cylinder or the like, but is not necessarily limited thereto.

The preferred example of the present invention as described above has been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to an electrolyte injection device for a battery cell related to one example of the present invention, in the process of transferring the battery cell after the electrolyte injection process, it is possible to prevent the phenomenon in which the separator inside the battery cell is folded due to the flow of the electrolyte injected into the battery cell.

## Claims

1. An electrolyte injection device for injecting an electrolyte into a battery cell including an electrode assembly, a pouch accommodating the electrode assembly, and a pair of lead tabs exposed to the outside of the pouch and electrically connected to the electrode assembly, comprising:
a transfer member provided to be transferable along a first direction;
a base member, which is disposed on the transfer member, for mounting at least one battery cell;
an injection part for injecting an electrolyte into the battery cell located on the base member; and
a clamping unit provided on the base member and provided to clamp both sides of the battery cell along the first direction.

2. The electrolyte injection device according to claim 1, wherein
the first direction is provided so as not to be parallel to a second direction connecting the pair of lead tabs of the battery cell.

3. The electrolyte injection device according to claim 2, wherein
the first direction is provided to be orthogonal to a second direction connecting the pair of lead tabs of the battery cell.

4. The electrolyte injection device according to claim 1, wherein
the clamping unit comprises first and second clamping members for clamping both sides of the battery cell facing each other along the first direction, respectively, and
the first clamping member and the second clamping member are provided so that the distance therebetween is adjusted.

5. The electrolyte injection device according to claim 4, wherein
the second clamping member is provided to be movable on the base member along the first direction, and
when an external force is applied to the second clamping member, the second clamping member is moved to increase the distance between the first and second clamping members, and
when the external force applied to the second clamping member is released, the second clamping member is moved to decrease the distance between the first and second clamping members.

6. The electrolyte injection device according to claim 5, wherein
the clamping unit further comprises a support unit for elastically supporting the second clamping member with respect to the base member, and
when the external force applied to the second clamping member is released, the second clamping member is moved by the support unit to decrease the distance between the first and second clamping members.

7. The electrolyte injection device according to claim 6, wherein
the clamping unit comprises a guide frame, on which the second clamping member is fixed, provided to be moved in a direction away from the first clamping member when an external force is applied.

8. The electrolyte injection device according to claim 7, wherein
the clamping unit further comprises a push bar connected to the guide frame and formed to protrude on the outside of the first clamping member, and
when an external force is applied to the push bar, the guide frame is moved together with the second clamping member in a direction away from the first clamping member.

9. The electrolyte injection device according to claim 8, wherein
the clamping unit further comprises at least one guide block provided on the base member to guide the movement of the guide frame, and
the guide frame is elastically supported on the base member by the support unit, and when the external force applied to the push bar is released, it is moved in a direction closer to the first clamping member along the guide block.

10. The electrolyte injection device according to claim 8, wherein
the support unit comprises a support block fixed to the base member and disposed at a predetermined interval from the guide frame; and
an elastic member fixed to the support block and the guide frame, respectively, and elastically supporting the guide frame with respect to the support block.

11. The electrolyte injection device according to claim 10, wherein
the elastic member is provided so that it is tensioned when the guide frame is moved in a direction away from the first clamping member and restored when the external force applied to the push bar is released.

12. The electrolyte injection device according to claim 11, wherein
the guide frame is moved in a direction closer to the first clamping member by the restoring force of the elastic member.

13. The electrolyte injection device according to claim 8, further comprising
a pressurizing member generating an external force pressurizing the push bar, wherein
the pressurizing member is provided to apply an external force to the push bar when the transfer member is moved along the first direction, and then reaches a preset position.

14. The electrolyte injection device according to claim 1, wherein
the first and second clamping members are provided in a plurality of members at predetermined intervals along a second direction connecting the pair of lead tabs of the battery cell.

15. The electrolyte injection device according to claim 14, wherein
the plurality of first and second clamping members are provided to clamp the central region and both side edge regions of the battery cell along the second direction, respectively, and
the clamping area for the central region and the clamping area for the edge region in the battery cell are set to be different from each other.
